# EUROPÄISCHE PATENTSCHRIFT

(11) **EP 4 599 157 B1**
(45) Veröffentlichungstag und Bekanntmachung des Hinweises auf die Patenterteilung: **21.01.2026**
(21) Anmeldenummer: 23786477.2
(22) Anmeldetag: 03.10.2023
(51) Int. Cl.: F02B 67/04, B60K 6/40, B60K 6/405, B60K 25/02

(54) **MASCHINENANORDNUNG MIT EINER BRENNKRAFTMASCHINE**
MACHINE ASSEMBLY COMPRISING AN INTERNAL COMBUSTION ENGINE
ENSEMBLE MACHINE COMPRENANT UN MOTEUR À COMBUSTION INTERNE

(30) Priorität: 03.10.2022 AT 507642022
(43) Veröffentlichungstag der Anmeldung: 13.08.2025
(73) Patentinhaber: AVL List GmbH, 8020 Graz (AT); Obrist Technologies GmbH, 6890 Lustenau (AT)
(72) Erfinder: BERGER, Robert, 8192 STRALLEGG (AT); OBRIST, Frank, 6900 BREGENZ (AT)
(74) Vertreter: Babeluk Patentanwälte GmbH
(86) Internationale Anmeldenummer: PCT/AT2023/060343
(87) Internationale Veröffentlichungsnummer: WO 2024/073787

(56) Entgegenhaltungen:
- EP-B1- 2 574 810
- DE-A1- 102007 001 840
- DE-A1- 102013 018 057
- US-B2- 10 532 647

## Beschreibung

Die Erfindung betrifft eine Maschinenanordnung mit einer Brennkraftmaschine mit zumindest einer in einem Kurbelgehäuse drehbar um eine Kurbelwellenachse gelagerten Kurbelwelle und zumindest einer elektrischen Maschine mit zumindest einem um eine Rotorachse drehbaren Rotor, wobei die Rotorachse parallel zur Kurbelwellenachse angeordnet ist, wobei der Rotor über eine Zahnradstufe mit der Kurbelwelle antriebsverbunden ist, und wobei die Zahnradstufe in einer normal zur Rotorachse und zur Kurbelwellenachse angeordneten Zahnradebene angeordnet ist, wobei ein Gehäuse der elektrischen Maschine über einen Brückenteil mit dem Kurbelgehäuse der Brennkraftmaschine fest verbunden ist, wobei der Brückenteil mit dem Gehäuse der elektrischen Maschine und mit dem Kurbelgehäuse derart verbunden, vorzugsweise verschraubt ist, und wobei der Abstand zwischen der Rotorachse und der Kurbelwellenachse durch den Brückenteil fixiert ist, und wobei die Kurbelwelle über zumindest ein Hauptlager in dem Kurbelgehäuse gelagert ist und der Brückenteil mit dem Kurbelgehäuse der Brennkraftmaschine im Bereich des Hauptlagers fest verbunden ist.

Die WO 2012/056275 A1 offenbart eine Maschinenkombination mit einer Brennkraftmaschine mit zwei gegenläufig drehenden Kurbelwellen und einem Generator, der über eine Zahnradstufe mit einem Zwischenzahnrad mit einer der beiden Kurbelwellen antriebsverbunden ist. Die Drehachse des Generators ist parallel zu den Kurbelwellen und mit Abstand von diesem angeordnet. Die Brennkraftmaschine und der Generator sind in einem gemeinsamen Gehäuse angeordnet.

Aus der US 9,843,238 B2 ist ein Stromerzeugungsaggregat mit einer Brennkraftmaschine und einem Generator bekannt, wobei der Generator mit der Brennkraftmaschine über einen Adapter verbunden ist. Der Generator ist dabei achsgleich zur Kurbelwelle der Brennkraftmaschine angeordnet.

Insbesondere bei Kurbelgehäuse aus Leichtmetall, bei denen die elektrische Maschine über eine Zahnradstufe mit der Kurbelwelle verbunden ist, ergibt sich das Problem der Maßhaltigkeit des Flankenspiels der Zahnräder der Zahnradstufe. Dies führt zu erhöhtem Verschleiß und zu höherer Geräuschabstrahlung.

Die DE 10 2007 001 840 A1 offenbart einen Hybridantrieb für ein Kraftfahrzeug mit einer Brennkraftmaschine, einem dieser nachgeordneten Getriebe und einem dem Getriebe zugeordneten Elektromotor, welcher über einen Tragarm am Getriebe gelagert ist.

Die US 10,532,647 B2 beschreibt ein Hybridfahrzeug mit einer Brennkraftmaschine und einem Motor-Generator, welcher über Getriebegehäuse mit der Brennkraftmaschine verbunden ist.

Die DE 10 2013 018 057 A1 offenbart einen Hybridantrieb für ein schienengebundenes Fahrzeug, mit einem Dieselmotor und zwei elektrischen Maschinen. Der Antrieb weist ein Gehäuseelement mit einem zentralen Gehäusekörper mit einer Lagerung zum Lagern einer Welle des Antriebsstranges des Antriebes auf. Das Gehäuseelement weist einen Flansch auf, der sich ausgehend vom Umfang des Gehäusekörpers radial nach außen erstreckt. In dem Flansch ist eine Halterung ausgebildet, die zum Halten und Befestigen einer elektrischen Maschine dient.

Die EP 2 574 810 B4 beschreibt eine Antriebseinheit mit einer elektrischen Maschine und einer Brennkraftmaschine, wobei das Gehäuse der elektrischen Maschine über einen Brückenteil mit dem Kurbelgehäuse der Brennkraftmaschine fest verbunden ist.

Aufgabe der Erfindung ist es bei einer Maschinenanordnung der genannten Art den Verschleiß und die Schallabstrahlung zu vermindern.

Diese Aufgabe wird durch eine eingangs genannte Maschinenanordnung erfindungsgemäß dadurch gelöst, dass das Hauptlager einen Hauptlagerbügeloberteil und einen Hauptlagerbügelunterteil aufweist, wobei der Hauptlagerbügelunterteil mit dem Hauptlagerbügeloberteil verbindbar ist und der Brückenteil mit dem Hauptlagerbügeloberteil des Hauptlagers fest verbunden ist.

Der Abstand zwischen der Rotorachse und der Kurbelwellenachse - und somit das Flankenspiel der im Eingriff stehenden Zahnräder der Zahnradstufe - wird somit durch den Brückenteil auf das vordefinierte Maß unveränderlich festgelegt. Durch die genaue Festlegung des optimalen Flankenspiels werden der Verschleiß und die Schallabstrahlung auf ein Mindestmaß beschränkt.

Die Verbindung des Brückenteils mit dem Kurbelgehäuse kann direkt oder indirekt erfolgen.

In einer Ausführungsvariante der Erfindung ist vorgesehen, dass der Hauptlagerbügelunterteil mit dem Hauptlagerbügeloberteil über Hauptlagerschrauben verschraubbar ist und insbesondere der Brückenteil mit dem Hauptlagerbügeloberteil des Kurbelgehäuses über zumindest zwei erste Befestigungsmittel, die beispielsweise als Schrauben ausgeführt sind - fest verbunden ist. Vorteilhaft ist es dabei, wenn der Hauptlagerbügel als ein in Bezug auf das Kurbelgehäuse separater Teil ausgebildet ist. Dies ermöglicht es, das Hauptlagerbügeloberteil aus einem Material mit höherer Festigkeit auszuführen als das Kurbelgehäuse. In dieser Ausführungsvariante ist der Brückenteil somit über den Hauptlagerbügeloberteil indirekt mit dem Kurbelgehäuse verbunden.

Eine Ausführungsvariante der Erfindung sieht vor, dass der Brückenteil mit dem Hauptlagerbügeloberteil über zumindest zwei erste Befestigungsmittel fest verbunden ist, wobei vorzugsweise zumindest ein erstes Befestigungsmittel zu zumindest einer Hauptlagerschraube der Brennkraftmaschine parallel verlaufend angeordnet ist.

Vorteilhafterweise ist das Gehäuse der elektrischen Maschine über zweite Befestigungsmittel mit dem Brückenteil verbunden, wobei vorzugsweise zumindest drei oder vier zweite Befestigungsmittel vorgesehen sind, die besonders vorzugsweise rund um die Rotorachse positioniert sind.

In einer weiteren Variante der Erfindung ragt ein aus dem Gehäuse der elektrischen Maschine hervorstehendes Ende des Rotors durch eine von einem Wandbereich begrenzte Ausnehmung im Kurbelgehäuse, wobei das Gehäuse auf einer ersten Seite und der Brückenteil auf einer der ersten Seite gegenüberliegenden zweiten Seite des Wandbereichs angeordnet sind und das Gehäuse mittels der zweiten Befestigungsmittel in einem die Rotorachse zumindest teilweise konzentrisch umgebenden Bereich gegen den Wandbereich des Kurbelgehäuses gepresst wird, wobei vorzugsweise zwischen Wandbereich und Gehäuse zumindest ein in einer korrespondierenden Ausnehmung des Gehäuses oder des Wandbereichs gelagertes äußeres Abdichtelement vorgesehen ist. Besonders günstig ist es dabei, wenn zumindest ein zweites Befestigungsmittel parallel zur Rotorachse verlaufend angeordnet ist. Dies ermöglicht eine feste Anbindung der elektrischen Maschine an das Kurbelgehäuse bei bestmöglichem Kraftfluss.

In weiterer Ausbildung der Erfindung ist vorgesehen, dass die Zahnradstufe zumindest ein mit dem Rotor drehfest verbundenes Rotorzahnrad und zumindest ein mit dem Rotorzahnrad wirkverbundenes und mit der Kurbelwelle drehfest verbundenes Kurbelwellenzahnrad aufweist, wobei vorzugsweise die Zahnradstufe zumindest ein Zwischenzahnrad aufweist, das mit dem Rotorzahnrad und/oder mit dem Kurbelwellenzahnrad im Zahneingriff steht. Dabei ist es von Vorteil, wenn das Zwischenzahnrad auf einem Zwischenzahnradträger drehbar gelagert ist, welcher Zwischenzahnradträger am Brückenteil befestigt, vorzugsweise über zumindest vier oder fünf dritte Schrauben angeschraubt ist. Der Brückenteil und/oder der Zwischenzahnradträger ist/sind durch jeweils ein im Wesentlichen parallel zur Zahnradebene angeordnetes plattenförmiges - vorzugsweise starres - Element gebildet.

Der Brückenteil und/oder der Zwischenzahnradträger ist/sind starr, also steif und unelastisch ausgebildet. Der Brückenteil und/oder der Zwischenzahnradträger weisen bevorzugt eine höhere Steifigkeit auf als das Kurbelgehäuse, wobei vorzugsweise der Brückenteil und/oder der Zwischenzahnradträger eine höhere Steifigkeit aufweisen als der Hauptlagerbügeloberteil. Die Steifigkeit eines technischen Körpers wird im Wesentlichen durch die Geometrie - also beispielsweise das Widerstandmoment um eine Achse - und den Werkstoff - also beispielsweise den Elastizitätsmodul oder den Schubmodul - definiert.

Vorteilhafterweise weisen der Brückenteil und/oder der Zwischenzahnradträger jeweils einen höheren Elastizitätsmodul auf als das Kurbelgehäuse, wobei vorzugsweise der Brückenteil und/oder der Zwischenzahnradträger einen höheren Elastizitätsmodul aufweisen als der Hauptlagerbügeloberteil. Der Brückenteil und/oder der Zwischenzahnradträger und/oder der Hauptlagerbügeloberteil bestehen bevorzugt aus Stahl. Das Kurbelgehäuse kann aus Leichtmetall, beispielsweise aus einer Aluminiumlegierung, bestehen.

Alternativ oder zusätzlich kann vorgesehen sein, dass der Brückenteil und/oder der Zwischenzahnradträger ein höheres Widerstandsmoment um die Rotorachse oder um die Kurbelwellenachse aufweisen als ein entsprechender Wandbereich des Kurbelgehäuses zwischen der Rotorachse und der Kurbelwellenachse.

Die Erfindung wird im Folgenden anhand eines in den Figuren dargestellten, nicht einschränkenden Ausführungsbeispiels näher erläutert. Darin zeigt:
- Fig. 1: eine erfindungsgemäße Maschinenanordnung in einer axonometrischen Frontansicht;
- Fig. 2: die Maschinenanordnung in einer axonometrischen Rückansicht;
- Fig. 3: die Maschinenanordnung mit entferntem Deckelteil in einer axonometrischen Frontansicht;
- Fig. 4: die Maschinenanordnung mit entferntem Deckelteil in einer Frontansicht;
- Fig. 5: die Maschinenanordnung mit entferntem Zwischenzahnradträger in einer Frontansicht;
- Fig. 6: die Maschinenanordnung in einer axonometrischen Darstellung von unten;
- Fig. 7: ein Detail der Maschinenanordnung mit entferntem Zwischenzahnrad in axonometrischer Darstellung;
- Fig. 8: ein Detail der Maschinenanordnung in einem Schnitt gemäß der Linie VIII - VIII in Fig. 4;
- Fig. 9: ein Detail der Maschinenanordnung in einem Schnitt gemäß der Linie IX - IX in Fig. 4;
- Fig. 10: ein Detail der Maschinenanordnung in einer axonometrischen Darstellung der Schnittdarstellung aus Fig. 9;
- Fig. 11: ein Detail der Maschinenanordnung in einer axonometrischen Darstellung mit entfernter elektrischer Maschine;
- Fig. 12: die Maschinenanordnung in einer weiteren axonometrischen Rückansicht;
- Fig. 13: eine Vorderseite des Brückenteils der Maschinenanordnung in einer axonometrischen Darstellung; und
- Fig. 14: eine Rückseite des Brückenteils in einer weiteren axonometrischen Darstellung.

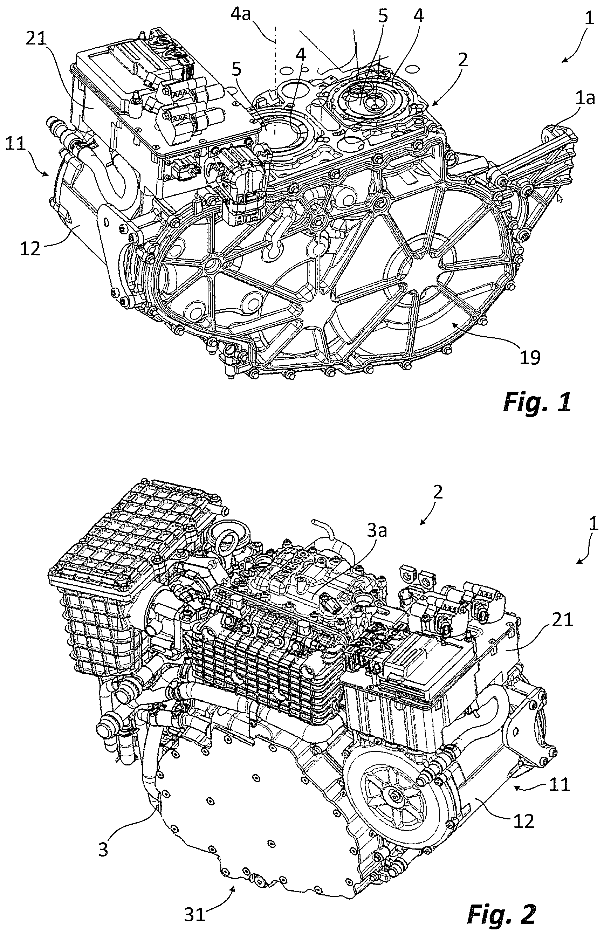

Die Fig. 1 bis Fig. 12 zeigen eine Maschinenanordnung 1 mit einer Brennkraftmaschine 2 und einer elektrischen Maschine 11, die insbesondere als Generator ausgebildet ist.

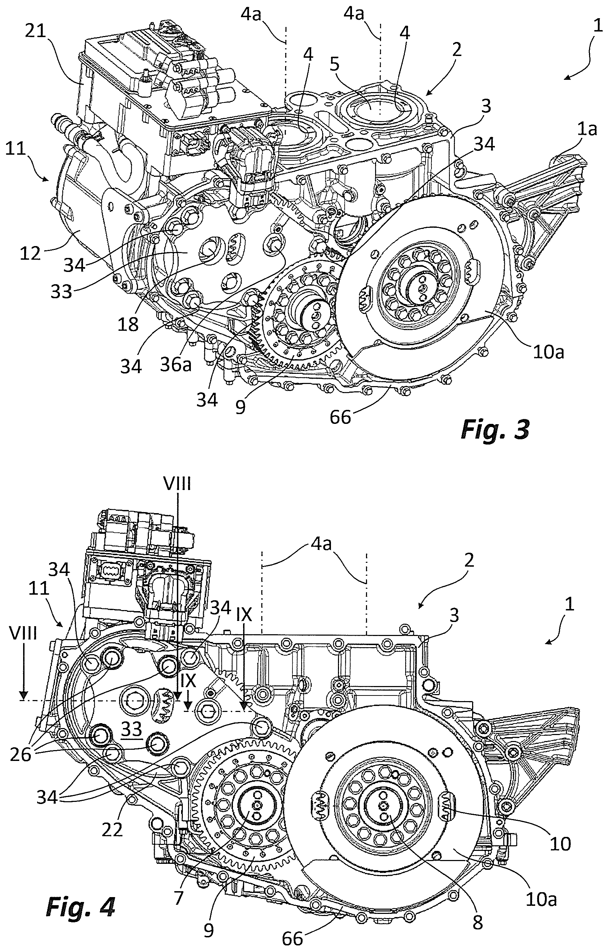

Die Brennkraftmaschine 2 weist ein Kurbelgehäuse 3 aus Leichtmetall mit zwei Zylindern 4 auf, in denen hin- und hergehende Hubkolben 5 geführt sind. Auf dem Kurbelgehäuse 3 ist ein Zylinderkopf 3a angeordnet (siehe Fig. 2). Der Zylinderkopf 3a ist in allen Figuren außer Fig. 2 nicht dargestellt. Ein Maschinenträger 1a ist seitlich an dem Kurbelgehäuse 3 angeordnet. Nach unten wird das Kurbelgehäuse 3 durch eine Ölwanne 66 abgeschlossen (siehe Fig. 3 bis Fig. 5).

Im Kurbelgehäuse 3 sind eine erste Kurbelwelle 7 und eine zweite Kurbelwelle 8 über Hauptlager 6 drehbar um ihre jeweiligen Kurbelwellenachsen 7a, 8a gelagert. Hauptlager 6 weisen dabei jeweils einen Hauptlagerbügeloberteil 6a und einen Hauptlagerbügelunterteil 6b auf, die miteinander verbunden sind, beispielsweise durch zwei Hauptlagerschrauben 6c. Im dargestellten Ausführungsbeispiel ist der Hauptlagerbügeloberteil 6a in Bezug auf das Kurbelgehäuse 3 als separater Bauteil ausgebildet und besteht beispielsweise aus Stahl.

Jeder Hubkolben 5 wirkt antriebsmäßig auf jeweils eine zugeordnete Kurbelwelle 7, 8 ein sind. Die beiden Kurbelwellen 7, 8 sind parallel zueinander angeordnet und stehen ihrerseits über jeweils ein an ihnen gleichachsig befestigtes Kurbelwellenzahnrad 9, 10 gegenläufig in Antriebsverbindung.

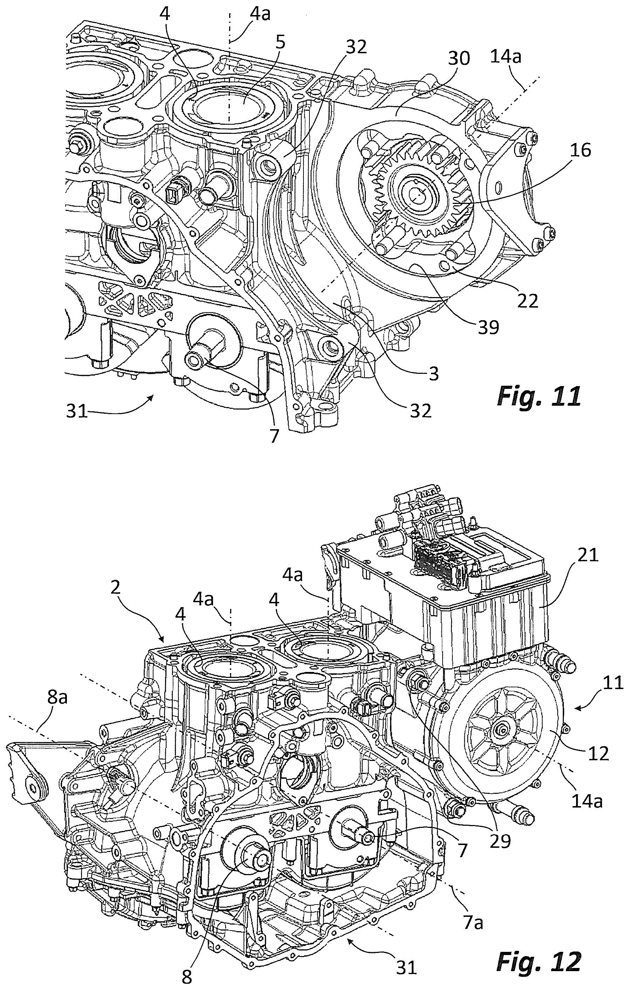

Die durch einen Generator gebildete elektrische Maschine 11 ist mit einer Leistungselektronik 21 verbunden. Die elektrische Maschine 11 weist ein Gehäuse 12 auf, in welchem ein Stator 13 und ein um eine Rotorachse 14a drehbarer Rotor 14 angeordnet sind, wobei die Rotorachse 14a parallel zu den Kurbelwellenachsen 7a, 8a angeordnet ist (siehe Fig. 12).

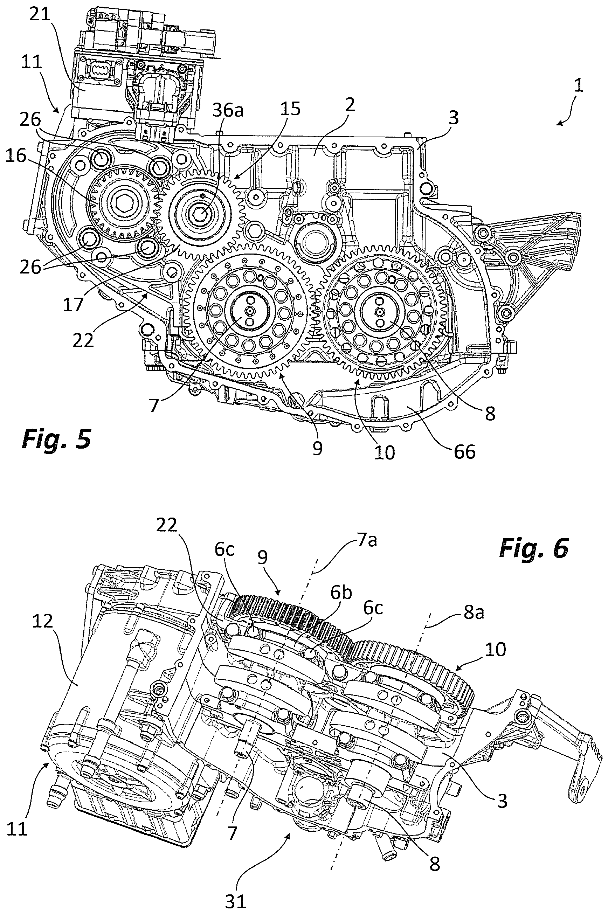

Der Rotor 14 der elektrischen Maschine 11 ist über eine Zahnradstufe 15 mit der ersten Kurbelwelle 7 antriebsverbunden (siehe Fig. 5). In Fig. 1 ist zu erkennen, dass die Zahnradstufe 15 bei bestimmungsgemäßer Verwendung an der Vorderseite der Maschinenanordnung 1 von einem Gehäusedeckel 19 abgedeckt wird. Die Zahnradstufe 15 besteht aus einem drehfest mit dem Rotor 14 verbundenen Rotorzahnrad 16, einem mit dem Rotorzahnrad 16 im Zahneingriff stehenden Zwischenzahnrad 17 und dem mit dem Zwischenzahnrad 17 im Zahneingriff stehenden ersten Kurbelwellenzahnrad 9. Das Rotorzahnrad 16 ist über eine mittige Schraube 18 mit dem Rotor 14 drehfest verbunden. Ein Schwungrad 10a ist mit dem zweiten Kurbelwellenzahnrad 10 oder der zweiten Kurbelwelle 8 drehfest verbunden (siehe Fig. 3 und Fig. 4).

Die Zahnradstufe 15 ist in einer normal zur Rotorachse 14a und zu den Kurbelwellenachsen 7a, 8a angeordneten Zahnradebene ε angeordnet. Im dargestellten Ausführungsbeispiel sind die elektrische Maschine 11 und das Kurbelgehäuse 3 auf derselben Seite der Zahnradebene ε angeordnet.

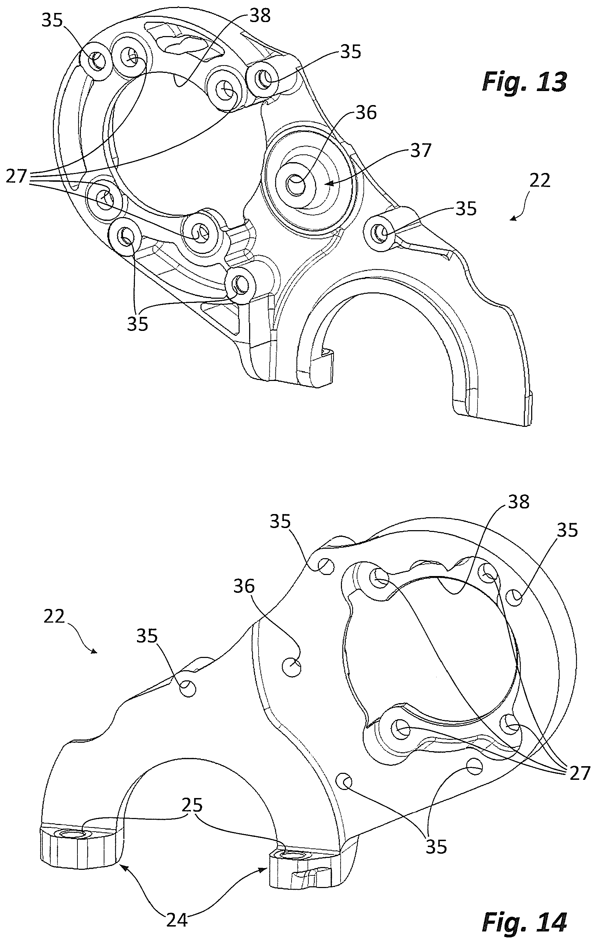

Um das Zahnflankenspiel der Zahnräder der Zahnradstufe 15, insbesondere dem ersten Kurbelwellenzahnrad 9, dem Zwischenzahnrad 17 und dem Rotorzahnrad 16, möglichst gering zu halten, ist an der Maschinenanordnung ein Brückenteil 22 vorgesehen. Der Brückenteil 22 stellt eine feste Verbindung her zwischen dem Gehäuse 12 der elektrischen Maschine 11 und dem Kurbelgehäuse 3 der Brennkraftmaschine 2. Der Brückenteil 22 ist dabei mit dem Hauptlagerbügeloberteil 6a fest verbunden, und das Gehäuse 12 der elektrischen Maschine 11 ist mit dem Brückenteil 22 verbunden, so dass der Abstand zwischen der Rotorachse 14a und der Kurbelwellenachse 7a der ersten Kurbelwelle 7 durch den Brückenteil 22 unveränderlich fixiert ist. Fig. 13 zeigt eine Vorderseite des Brückenteils 22, die im montierten Zustand vom Kurbelgehäuse 3 abgewandt orientiert ist, während Fig. 14 eine Rückseite des Brückenteils 22 zeigt, die zum Kurbelgehäuse 3 bzw. zur elektrischen Maschine 11 orientiert ist. Der Brückenteil 22 weist im Wesentlichen eine Plattenform auf, wobei die Plattenebene im montierten Zustand des Brückenteils 22 parallel zur Zahnradebene ε orientiert ist. Der Brückenteil 22 ist als starres Element ausgeführt. In Fig. 13 sind jeweils konzentrisch rund um eine Rotorzahnradausnehmung 38 Aufnahmen 27 für Befestigungsmittel dargestellt, wobei es sich um zweite Befestigungsmittel 26 - vorzugsweise in Form von Schrauben - handelt, um die elektrische Maschine 11 über deren Gehäuse 12 mit dem Brückenteil 22 zu verbinden. Die Aufnahmen 27 sind dabei als unbearbeitete Löcher ausgeführt, die zweiten Befestigungsmittel 26 werden dann in korrespondierenden Öffnungen im Gehäuse 12, die beispielsweise mit einem Gewinde ausgeführt sind, befestigt bzw. verschraubt.

Des Weiteren sind insgesamt fünf Bohrungsbutzen 35 dargestellt, über die ein weiter unten erläuterter Zwischenzahnradträger 33 mit dritten Befestigungsmitteln 34 am Brückenteil 22 befestigt werden kann. Wenn Schrauben als dritte Befestigungsmittel 34 verwendet werden, können die Bohrungsbutzen 35 mit einem Innengewinde versehen werden, um das Verschrauben zu ermöglichen.

Zentral am Brückenteil 22 ist eine Lagerstelle 37 für das Zwischenzahnrad 17 vorgesehen, die eine Gewindebohrung 36 zur Aufnahme einer Schraube aufweist, mit der das Zwischenzahnrad 17 montiert werden kann.

In Fig. 14 sind deutlich zwei Befestigungslaschen 24 zu erkennen, mit denen der Brückenteil 22 direkt oder indirekt fest mit dem Kurbelgehäuse 3 verbunden werden kann. Dazu sind in den Befestigungslaschen 24 erste Bohrungen 25 zur Aufnahme von Befestigungsmitteln - beispielsweise Schrauben - vorgesehen. Die Befestigungslaschen 24 sind um etwa 90° in Bezug auf die Zahnradebene ε abgewinkelt ausgeführt.

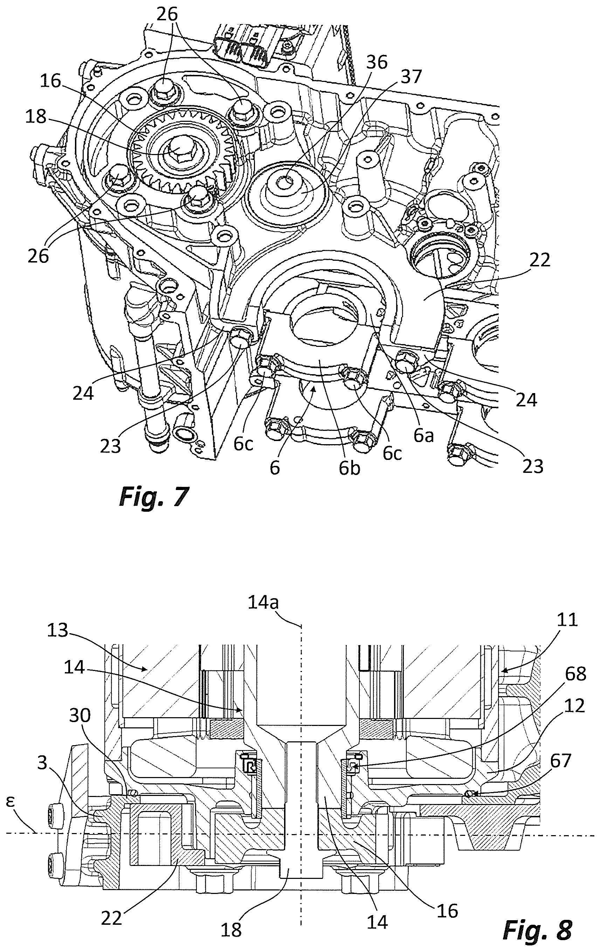

Wie in Fig. 7 gezeigt ist, ist der Brückenteil 22 einerseits mit dem Kurbelgehäuse 3 der Brennkraftmaschine 2 verbunden. Diese feste Verbindung erfolgt im Bereich eines Hauptlagers 6 der ersten Kurbelwelle 7. Im dargestellten Ausführungsbeispiel ist der Hauptlagerbügeloberteil 6a des Hauptlagers 6 hinsichtlich des Kurbelgehäuses 3 als separater Bauteil ausgebildet, besteht beispielsweise aus Stahl und ist mit dem Kurbelgehäuse 3 fest verbunden. Der Brückenteil 22 ist mit dem Hauptlagerbügeloberteil 6a und auf diese Weise indirekt mit dem Kurbelgehäuse 3 fest verbunden. In einer nicht dargestellten Variante ist der Hauptlagerbügeloberteil 6a einstückig mit dem Kurbelgehäuse 3 ausgeführt, so dass der Brückenteil 22 bei Montage am Hauptlagerbügeloberteil 6a direkt mit dem Kurbelgehäuse 3 verbunden ist.

Der Verbindung des Brückenteils 22 mit dem Hauptlagerbügeloberteil 6a und somit mit dem Kurbelgehäuse 3 erfolgt über nur zwei erste Befestigungsmittel 23, die als Schrauben ausgeführt sind und an den Befestigungslaschen 24 des Brückenteils 22 durch die dort vorgesehenen ersten Bohrungen 25 in das Kurbelgehäuse 3 verschraubt werden. Die ersten Befestigungsmittel 23 sind im dargestellten Ausführungsbeispiel parallel zu den Hauptlagerschrauben 6c und/oder zu den Zylinderachsen 4a der Zylinder 4 der Brennkraftmaschine 2 verlaufend angeordnet. Insbesondere sind die Befestigungsmittel 23 normal zur ersten Kurbelwellenachse 7a und zur Rotorachse 14a orientiert (Fig. 12).

Andererseits ist der Brückenteil 22 mit der elektrischen Maschine 11 fest verbunden. Dazu werden zweite Befestigungsmittel 26 - hier in Form von Schrauben - durch die Aufnahmen 27 im Brückenteil 22 geführt und in korrespondierende Gewindelöcher im Gehäuse 12 der elektrischen Maschine 11 verschraubt. Die zweiten Befestigungsmittel 26 sind hier parallel zur Rotorachse 14a verlaufend angeordnet. Im montierten Zustand ragt der Rotor 14 mit dem montierten Rotorzahnrad 16 durch die Rotorzahnradausnehmung 38 im Brückenteil 22.

Insbesondere in Fig. 11 ist zu erkennen, dass im Kurbelgehäuse 3 eine durch einen Wandbereich 30 begrenzte Ausnehmung 39 vorgesehen ist, die im montierten Zustand des Brückenteils 22 im Wesentlichen mit der im Brückenteil 22 ausgeführten Rotorzahnradausnehmung 38 korrespondiert.

Nach Verschrauben der elektrischen Maschine 11 mit dem Brückenteil 22 ragt der Rotor 14 bzw. ein aus dem Gehäuse 12 der elektrischen Maschine 11 hervorstehendes Ende des Rotors 14 durch die vom Wandbereich 30 begrenzte Ausnehmung 39 im Kurbelgehäuse 3 und durch die Rotorzahnradausnehmung 38 im Brückenteil 22, so dass das Rotorzahnrad 16 montiert und ordnungsgemäß betrieben werden kann. Das Gehäuse 12 ist dabei auf einer ersten Seite und der Brückenteil 22 auf einer der ersten Seite gegenüberliegenden zweiten Seite des Wandbereichs 30 angeordnet.

Das Gehäuse 12 wird mittels der zweiten Befestigungsmittel 26 in einem die Rotorachse 14a zumindest teilweise konzentrisch umgebenden Bereich gegen den Wandbereich 30 des Kurbelgehäuses 3 gepresst wird, so dass sich eine Dichtwirkung ergibt. Zwischen Wandbereich 30 und Gehäuse 12 ist dazu zumindest ein in einer korrespondierenden Ausnehmung des Gehäuses 12 gelagertes äußeres Abdichtelement 67 vorgesehen (Fig. 8). Zusätzlich ist in einem Bereich nahe dem Rotor 14 ein zwischen dem Rotor 14 und dem Gehäuse 12 angeordnetes inneres Abdichtelement 68 vorgesehen.

Zusätzlich zur Befestigung am Brückenteil 22 ist die elektrische Maschine 11 auch direkt mit dem Kurbelgehäuse 3 verbunden. Dazu sind im Bereich der von der Zahnradebene ε abgewandten Rückseite 31 des Kurbelgehäuses 3 Butzen 32 vorgesehen (Fig. 11), über die das Gehäuse 12 mittels zweier weiterer als Befestigungsschrauben 29 ausgeführter Befestigungsmittel mit dem Kurbelgehäuse 3 verschraubbar ist (Fig. 12).

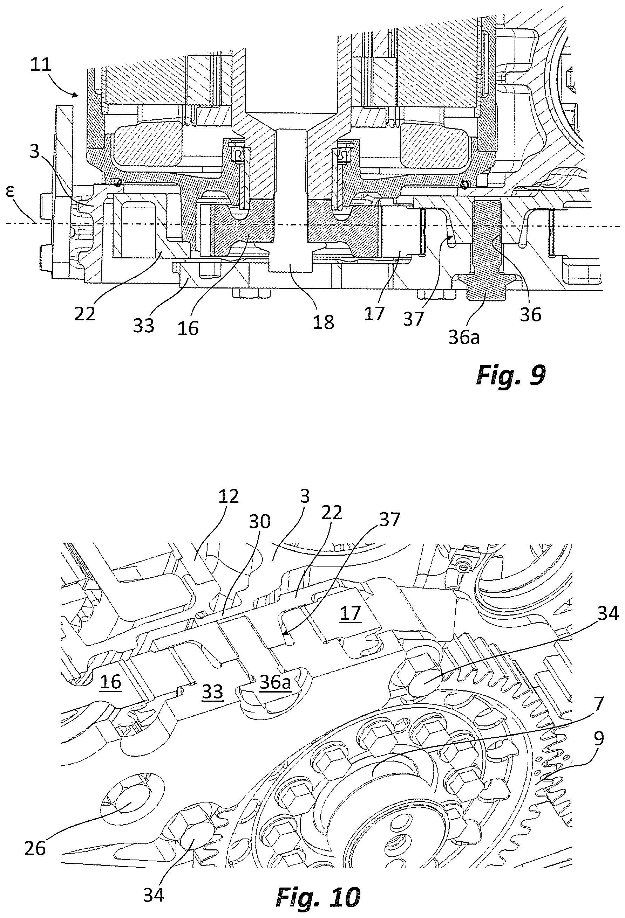

Das Brückenteil 22 dient darüber hinaus im weitesten Sinn auch zur Aufnahme des Zwischenzahnrads 17 der Zahnradstufe 15, das auf einem separaten flachen, im Wesentlichen plattenförmigen Zwischenzahnradträger 33 über eine drückölgeschmierte Gleitlagerung drehbar gelagert ist. Wie insbesondere in Fig. 9 zu erkennen ist, stellt die Gleitlagerung (ohne Bezugszeichen) einen Teil des Zwischenzahnradträgers 33 dar und sitzt auf einer Lageraufnahme 37 auf, die Teil des Brückenteils 22 ist (siehe Fig. 13). Zur Befestigung des Zwischenzahnrads 17 erfolgt mit einer Verschraubung 36a in einer Gewindebohrung 36, die in der Lageraufnahme 37 ausgeführt ist. Die Befestigung des Zwischenzahnrads 17 erfolgt also nur am Brückenteil 22 bzw. am Zwischenzahnradträger 33 und es gibt keine direkte Verbindung zum Kurbelgehäuse 3 oder zum Gehäuse 12 der elektrischen Maschine 11.

Der Zwischenzahnradträger 33 ist über dritte Befestigungsmittel 34, die hier als Schrauben ausgeführt sind, am Brückenteil 22 befestigt. Dazu sind am Brückenteil 22 die bereits oben beschriebenen Bohrungsbutzen 35 vorgesehen, die zur Aufnahme der dritten Befestigungsmittel 34 mit einem Innengewinde ausgeführt sind. Der Zwischenzahnradträger 33 ist also nur mit dem Brückenteil 22 verbunden und es gibt keine direkte Verbindung zum Kurbelgehäuse 3 oder zum Gehäuse 12 der elektrischen Maschine 11.

Um den Verschleiß und die Schallabstrahlung zu vermindern, bestehen der Brückenteil 22 und/oder der Zwischenzahnradträger 33 aus einem Werkstoff mit einem höheren Elastizitätsmodul als das Kurbelgehäuse 3, vorzugsweise auch aus einem Werkstoff mit einem höheren Elastizitätsmodul als der Hauptlagerbügeloberteil 6a. Weiters können der Brückenteil 22 und/oder der Zwischenzahnradträger 33 ein höheres Widerstandsmoment um die Rotorachse 14a oder um die erste Kurbelwellenachse 7a aufweisen, als ein entsprechender Wandbereich 30 des Kurbelgehäuses 3 zwischen der Rotorachse 14a und der ersten Kurbelwellenachse 7a.

Im gezeigten Ausführungsbeispiel besteht der Brückenteil 22 aus einem festeren Werkstoff als das Kurbelgehäuse 3, beispielsweise aus Stahl. Der Zwischenzahnradträger 33 ist im Ausführungsbeispiel ebenfalls durch eine im Wesentlichen parallel zur Zahnradebene ε angeordnete Platte aus Stahl gebildet.

Durch den starren Brückenteil 22 kann das Zahnflankenspiel der Zahnradstufe 15 so gering wie möglich gehalten werden, um einerseits die Geräuschabstrahlung und anderseits den Verschleiß an den Zahnrädern der Zahnradstufe 15 zu minimieren. Alle für die Zahnradstufe 15 notwendigen Zahnräder sind dabei in Stahl gelagert bzw. in einer gemeinsamen Aufspannung bearbeitet, um Achsabstandstoleranzen so klein wie möglich zu halten.

## Patentansprüche

1. Maschinenanordnung (1) mit einer Brennkraftmaschine (2) mit zumindest einer in einem Kurbelgehäuse (3) drehbar um eine Kurbelwellenachse (7a) gelagerten Kurbelwelle (7) und zumindest einer elektrischen Maschine (11) mit zumindest einem um eine Rotorachse (14a) drehbaren Rotor (14), wobei die Rotorachse (14a) parallel zur Kurbelwellenachse (7a) angeordnet ist, wobei der Rotor (14) über eine Zahnradstufe (15) mit der Kurbelwelle (7) antriebsverbunden ist, und wobei die Zahnradstufe (15) in einer normal zur Rotorachse (14a) und zur Kurbelwellenachse (7a) angeordneten Zahnradebene (ε) angeordnet ist, wobei ein Gehäuse (12) der elektrischen Maschine (11) über einen Brückenteil (22) mit dem Kurbelgehäuse (3) der Brennkraftmaschine (2) fest verbunden ist, wobei der Brückenteil (22) mit dem Gehäuse (12) der elektrischen Maschine (11) und mit dem Kurbelgehäuse (3) derart verbunden, vorzugsweise verschraubt ist, wobei der Abstand zwischen der Rotorachse (14a) und der Kurbelwellenachse (7a) durch den Brückenteil (22) fixiert ist, und wobei die Kurbelwelle (7) über zumindest ein Hauptlager (6) in dem Kurbelgehäuse (3) gelagert ist und der Brückenteil (22) mit dem Kurbelgehäuse (3) der Brennkraftmaschine (2) im Bereich des Hauptlagers (6) fest verbunden ist, **dadurch gekennzeichnet, dass** das Hauptlager (6) einen Hauptlagerbügeloberteil (6a) und einen Hauptlagerbügelunterteil (6b) aufweist, wobei der Hauptlagerbügelunterteil (6b) mit dem Hauptlagerbügeloberteil (6a) verbindbar ist und der Brückenteil (22) mit dem Hauptlagerbügeloberteil (6a) des Hauptlagers (6) fest verbunden ist.

2. Maschinenanordnung (1) nach Anspruch 2, **dadurch gekennzeichnet, dass** der Hauptlagerbügelunterteil (6b) mit dem Hauptlagerbügeloberteil (6a) verschraubbar ist.

3. Maschinenanordnung (1) nach Anspruch 1 oder 2, **dadurch gekennzeichnet, dass** der Brückenteil (22) mit dem Hauptlagerbügeloberteil (6a) über zumindest zwei erste Befestigungsmittel (23) fest verbunden ist, wobei vorzugsweise zumindest ein erstes Befestigungsmittel (23) zu zumindest einer Hauptlagerschraube (6c) des Hauptlagers (6) der Brennkraftmaschine (2) parallel verlaufend angeordnet ist.

4. Maschinenanordnung (1) nach einem der Ansprüche 1 bis 3, **dadurch gekennzeichnet, dass** das Gehäuse (12) der elektrischen Maschine (11) über zweite Befestigungsmittel (26) mit dem Brückenteil (22) verbunden ist, wobei vorzugsweise zumindest drei oder vier zweite Befestigungsmittel (26) vorgesehen sind, die besonders vorzugsweise rund um die Rotorachse (14a) positioniert sind.

5. Maschinenanordnung (1) nach Anspruch 4, **dadurch gekennzeichnet, dass** ein aus dem Gehäuse (12) der elektrischen Maschine (11) hervorstehendes Ende des Rotors (14) durch eine von einem Wandbereich (30) begrenzte Ausnehmung (39) im Kurbelgehäuse (3) ragt, wobei das Gehäuse (12) auf einer ersten Seite und der Brückenteil (22) auf einer der ersten Seite gegenüberliegenden zweiten Seite des Wandbereichs (30) angeordnet sind und das Gehäuse (12) mittels der zweiten Befestigungsmittel (26) in einem die Rotorachse (14a) zumindest teilweise konzentrisch umgebenden Bereich gegen den Wandbereich (30) des Kurbelgehäuses gepresst wird, wobei vorzugsweise zwischen Wandbereich (30) und Gehäuse (12) zumindest ein in einer korrespondierenden Ausnehmung des Gehäuses (11) oder des Wandbereichs (30) gelagertes äußeres Abdichtelement (67) vorgesehen ist.

6. Maschinenanordnung (1) nach einem der Ansprüche 1 bis 5, **dadurch gekennzeichnet, dass** die Zahnradstufe (15) zumindest ein mit dem Rotor (14) drehfest verbundenes Rotorzahnrad (16) und zumindest ein mit dem Rotorzahnrad (16) wirkverbundenes und mit der Kurbelwelle (7) drehfest verbundenes Kurbelwellenzahnrad (9) aufweist, wobei vorzugsweise die Zahnradstufe (15) zumindest ein Zwischenzahnrad (17) aufweist, das mit dem Rotorzahnrad (16) und/oder mit dem Kurbelwellenzahnrad (9) im Zahneingriff steht.

7. Maschinenanordnung (1) nach Anspruch 6, **dadurch gekennzeichnet, dass** das Zwischenzahnrad (17) auf einem Zwischenzahnradträger (33) drehbar gelagert ist, welcher Zwischenzahnradträger (33) am Brückenteil (22) befestigt, vorzugsweise über dritte Befestigungsmittel (34), die besonders vorzugsweise als Schrauben ausgeführt sind.

8. Maschinenanordnung (1) nach einem der Ansprüche 1 bis 7, **dadurch gekennzeichnet, dass** der Brückenteil (22) und/oder der Zwischenzahnradträger (33) durch jeweils ein im Wesentlichen parallel zur Zahnradebene (ε) angeordnetes plattenförmiges Element gebildet ist.

9. Maschinenanordnung (1) nach einem der Ansprüche 1 bis 8, **dadurch gekennzeichnet, dass** der Brückenteil (22) und/oder der Zwischenzahnradträger (33) einen höheren Elastizitätsmodul aufweisen als das Kurbelgehäuse (3), wobei vorzugsweise der Brückenteil (22) und/oder der Zwischenzahnradträger (33) einen höheren Elastizitätsmodul aufweist oder aufweisen als der Hauptlagerbügeloberteil (6a).

10. Maschinenanordnung (1) nach einem der Ansprüche 1 bis 9, **dadurch gekennzeichnet, dass** der Brückenteil (22) und/oder der Zwischenzahnradträger (33) ein höheres Widerstandsmoment um die Rotorachse (14a) oder um die Kurbelwellenachse (7a) aufweisen als eine entsprechender Wandbereich (30) des Kurbelgehäuses (3), insbesondere zwischen der Rotorachse (14a) und der Kurbelwellenachse (7a).

11. Maschinenanordnung (1) nach einem der Ansprüche 1 bis 10, **dadurch gekennzeichnet, dass** der Brückenteil (22) und/oder der Zwischenzahnradträger (33) und/oder der Hauptlagerbügeloberteil (6a) aus Stahl besteht/bestehen.

12. Maschinenanordnung (1) nach einem der Ansprüche 1 bis 11, **dadurch gekennzeichnet, dass** das Kurbelgehäuse (3) aus Leichtmetall besteht.

## Claims

1. Machine arrangement (1) having an internal combustion engine (2) with at least one crankshaft (7) rotatably mounted in a crankcase (3) about a crankshaft axis (7a) and at least one electric machine (11) with at least one rotor (14) rotatable about a rotor axis (14a), wherein the rotor axis (14a) is arranged parallel to the crankshaft axis (7a), wherein the rotor (14) is drive-connected to the crankshaft (7) via a gear stage (15), and wherein the gear stage (15) is arranged in a gear plane (ε) arranged normal to the rotor axis (14a) and the crankshaft axis (7a), wherein a housing (12) of the electric machine (11) is firmly connected to the crankcase (3) of the internal combustion engine (2) via a bridge part (22), wherein the bridge part (22) is connected, preferably bolted, to the housing (12) of the electric machine (11) and to the crankcase (3), wherein the distance between the rotor axis (14a) and the crankshaft axis (7a) is fixed by the bridge part (22), and wherein the crankshaft (7) is mounted in the crankcase (3) via at least one main bearing (6) and the bridge part (22) is firmly connected to the crankcase (3) of the internal combustion engine (2) in the area of the main bearing (6), **characterised in that** the main bearing (6) has a main bearing bracket upper part (6a) and a main bearing bracket lower part (6b), wherein the main bearing bracket lower part (6b) can be connected to the main bearing bracket upper part (6a) and the bridge part (22) is firmly connected to the main bearing bracket upper part (6a) of the main bearing (6).

2. Machine arrangement (1) according to claim 2, **characterised in that** the main bearing bracket lower part (6b) can be screwed to the main bearing bracket upper part (6a).

3. Machine arrangement (1) according to claim 1 or 2, **characterised in that** the bridge part (22) is firmly connected to the main bearing bracket upper part (6a) by means of at least two first fastening means (23), wherein preferably at least one first fastening means (23) is arranged so as to extend parallel to at least one main bearing screw (6c) of the main bearing (6) of the internal combustion engine (2).

4. Machine arrangement (1) according to one of claims 1 to 3, **characterised in that** the housing (12) of the electric machine (11) is connected to the bridge part (22) via second fastening means (26), wherein preferably at least three or four second fastening means (26) are provided, which are particularly preferably positioned around the rotor axis (14a).

5. Machine arrangement (1) according to claim 4, **characterised in that** an end of the rotor (14) protruding from the housing (12) of the electric machine (11) extends through a recess (39) in the crankcase (3) bounded by a wall region (30), wherein the housing (12) is arranged on a first side and the bridge part (22) is arranged on a second side of the wall region (30) opposite the first side, and the housing (12) is pressed against the wall region (30) of the crankcase by means of the second fastening means (26) in a region at least partially concentrically surrounding the rotor axis (14a), wherein preferably at least one outer sealing element (67) is provided between the wall region (30) and the housing (12), which sealing element is mounted in a corresponding recess in the housing (11) or the wall region (30).

6. Machine arrangement (1) according to one of claims 1 to 5, **characterised in that** the gear stage (15) has at least one rotor gear (16) connected in a rotationally fixed manner to the rotor (14) and at least one crankshaft gear (9) operatively connected to the rotor gear (16) and connected in a rotationally fixed manner to the crankshaft (7), wherein preferably the gear stage (15) has at least one intermediate gear (17) which is in meshing engagement with the rotor gear (16) and/or with the crankshaft gear (9).

7. Machine arrangement (1) according to claim 6, **characterised in that** the intermediate gear (17) is rotatably mounted on an intermediate gear carrier (33), which intermediate gear carrier (33) is fastened to the bridge part (22), preferably via third fastening means (34), which are particularly preferably designed as screws.

8. Machine arrangement (1) according to one of claims 1 to 7, **characterised in that** the bridge part (22) and/or the intermediate gear carrier (33) is formed in each case by a plate-shaped element arranged essentially parallel to the gear plane (ε).

9. Machine arrangement (1) according to one of claims 1 to 8, **characterised in that** the bridge part (22) and/or the intermediate gear carrier (33) have a higher modulus of elasticity than the crankcase (3), wherein preferably the bridge part (22) and/or the intermediate gear carrier (33) has or have a higher modulus of elasticity than the main bearing bracket upper part (6a).

10. Machine arrangement (1) according to one of claims 1 to 9, **characterised in that** the bridge part (22) and/or the intermediate gear carrier (33) have a higher resistance moment about the rotor axis (14a) or about the crankshaft axis (7a) than a corresponding wall region (30) of the crankcase (3), in particular between the rotor axis (14a) and the crankshaft axis (7a).

11. Machine arrangement (1) according to one of claims 1 to 10, **characterised in that** the bridge part (22) and/or the intermediate gear carrier (33) and/or the main bearing bracket upper part (6a) is/are made of steel.

12. Machine arrangement (1) according to one of claims 1 to 11, **characterised in that** the crankcase (3) is made of light metal.

## Revendications

1. Ensemble (1) machine comprenant un moteur (2) à combustion interne ayant au moins un vilebrequin (7) monté, dans un carter (3) de vilebrequin, tournant autour d'un axe (7a) de vilebrequin et, au moins, un moteur (11) électrique ayant au moins un rotor (14) tournant autour d'un axe (14a) de rotor, dans lequel l'axe (14a) du rotor est parallèle à l'axe (7a) du vilebrequin, dans lequel le rotor (14) est relié en entraînement au vilebrequin (7) par un étage (15) d'engrenage et dans lequel l'étage (15) d'engrenage est disposé dans un plan (ε) d'engrenage normal à l'axe (14a) du rotor et à l'axe (7a) du vilebrequin, dans lequel un carter (12) du moteur (11) électrique est relié fixement au carter (3) de vilebrequin du moteur (2) à combustion interne par une partie (22) formant un pont, dans lequel la partie (22) formant pont est assemblée au carter (12) du moteur (11) électrique et au carter (3) du vilebrequin en étant, de préférence, vissée, dans lequel la distance entre l'axe (14a) du rotor et l'axe (7a) du vilebrequin est fixée par la partie (22) formant pont et dans lequel le vilebrequin (7) est monté dans le carter (3) du vilebrequin par au moins un palier (6) principal et la partie (22) formant pont est assemblée fixement au carter (3) du vilebrequin du moteur (2) à combustion interne dans la zone du palier (6) principal, **caractérisé en ce que** le palier (6) principal a une partie (6a) supérieure de collet de palier principal et une partie (6b) inférieure de collet de palier principal, dans lequel la partie (6b) inférieure de collet de palier principal peut être assemblée à la partie (6a) supérieure de collet de palier principal et la partie (22) formant pont est assemblée fixement à la partie (6a) supérieure de palier principal du palier (6) principal.

2. Ensemble (1) machine suivant la revendication 2, **caractérisé en ce que** la partie (6b) inférieure de collet de palier principal peut être vissée à la partie (6a) supérieure de collet de palier principal.

3. Ensemble (1) machine suivant la revendication 1 ou 2, **caractérisé en ce que** la partie (22) formant pont est assemblée fixement à la partie (6a) supérieure de collet de palier principal par au moins deux premiers moyens (23) de fixation, dans lequel de préférence au moins un premier moyen (23) de fixation est disposé en s'étendant parallèlement à au moins une vis (6c) de palier principal du palier (6) principal du moteur (2) à combustion interne.

4. Ensemble (1) machine suivant l'une des revendications 1 à 3, **caractérisé en ce que** le carter (12) du moteur (11) électrique est assemblé à la partie (22) formant pont par des deuxièmes moyens (26) de fixation, dans lequel il est prévu, de préférence, au moins trois ou quatre deuxièmes moyens (26) de fixation, qui sont en position, d'une manière particulièrement préférée, autour de l'axe (14a) du rotor.

5. Ensemble (1) machine suivant la revendication 4, **caractérisé en ce qu'**une extrémité, en saillie du carter (12) du moteur (11) électrique, du rotor (14) fait saillie dans le carter (3) du vilebrequin en passant dans un évidement (39) délimité par une zone (30) de paroi, dans lequel le carter (12) est disposé sur une première face et la partie (22) formant pont sur une deuxième face, opposée à la première face, de la zone (30) de paroi et le carter (12) est, au moyen des deuxièmes moyens (26) de fixation, pressé sur la zone (30) de paroi du carter du vilebrequin entourant, concentriquement au moins en partie, l'axe (14a) du rotor, dans lequel il est prévu de préférence entre la zone (30) de paroi et le carter (12) au moins un élément (67) d'étanchéité extérieur, monté dans un évidement correspondant du carter (11) ou de la zone (30) de paroi.

6. Ensemble (1) machine suivant l'une des revendications 1 à 5, **caractérisé en ce que** l'étage (15) d'engrenages a, au moins, un engrenage (16) de rotor, solidaire en rotation du rotor (14) et au moins un engrenage (9) de vilebrequin, relié en action à l'engrenage (16) du rotor et solidaire en rotation du vilebrequin (7), dans lequel de préférence l'étage (15) d'engrenages a au moins un engrenage (17) intermédiaire, qui est en prise avec l'engrenage (16) du rotor et/ou avec l'engrenage (9) du vilebrequin.

7. Ensemble (1) machine suivant la revendication 6, **caractérisé en ce que** l'engrenage (17) intermédiaire est monté tournant sur un support (33) d'engrenage intermédiaire, lequel support (33) d'engrenage intermédiaire est fixé à la partie (22) formant pont, de préférence par des troisièmes moyens (34) de fixation, qui sont réalisés d'une manière particulièrement préférée sous la forme de vis.

8. Ensemble (1) machine suivant l'une des revendications 1 à 7, **caractérisé en ce que** la partie (22) formant pont et/ou le support (33) de l'engrenage intermédiaire sont formés par respectivement un élément en forme de plaque, disposé sensiblement parallèlement au plan (ε) de l'engrenage.

9. Ensemble (1) machine suivant l'une des revendications 1 à 8, **caractérisé en ce que** la partie (22) formant pont et/ou le support (33) de l'engrenage intermédiaire ont un module d'élasticité plus grand que le carter (3) du vilebrequin, dans lequel de préférence la partie (22) formant pont et/ou le support (33) d'engrenage intermédiaire a ou ont un module d'élasticité plus grand que la partie (6a) supérieure de collet de palier principal.

10. Ensemble (1) machine suivant l'une des revendications 1 à 9, **caractérisé en ce que** la partie (22) formant pont et/ou le support (33) de l'engrenage intermédiaire a un couple résistant autour de l'axe (14a) du rotor ou autour de l'axe (7a) du vilebrequin plus grand qu'une zone (30) de paroi correspondante du carter (3) du vilebrequin, en particulier entre l'axe (14a) du rotor et l'axe (7a) du vilebrequin.

11. Ensemble (1) machine suivant l'une des revendications 1 à 10, **caractérisé en ce que** la partie (22) formant pont et/ou le support (33) de l'engrenage intermédiaire et/ou la partie (6a) supérieure de collet du palier principal est/sont en acier.

12. Ensemble (1) machine suivant l'une des revendications 1 à 11, **caractérisé en ce que** le carter (3) du vilebrequin est en métal léger.
